# EUROPEAN PATENT SPECIFICATION

(11) **EP 2 026 508 B1**
(45) Date of publication and mention of the grant of the patent: **12.03.2014**
(21) Application number: 08164713.3
(22) Date of filing: 25.05.2001
(51) Int. Cl.: H04L 12/28, H04N 7/173

(54) **Multiple access system for communications network**
Mehrfachzugriffsystem für ein Kommunikationsnetzwerk
Système à accès multiple pour réseau de communications

(30) Priority: 30.05.2000 US 584331; 12.03.2001 US 804316
(43) Date of publication of application: 18.02.2009
(62) Divisional of application: 01934162.7
(73) Proprietor: Nortel Networks Limited, St.Laurent, Québec H4S 2A9 (CA)
(72) Inventor: Unitt, Brian, Bishop's Stortford, CM23 2QN (GB); Grant, Michael, Bishop's Stortford, Hertfordshire CM23 4 (GB); Tate, Christopher, Bishop's Stortford, Hertfordshire CM23 4 (GB); Wallace, Andrew, Harlow, Essex CM17 9PF (GB); Algie, Glen, Ottawa Ontario K1V 7H9 (CA)
(74) Representative: Ertl, Nicholas Justin

(56) References cited:
- EP-A- 0 495 600
- EP-A- 0 709 982
- EP-A- 0 714 684
- WO-A-95/13681
- US-A- 5 276 703

## Description

### FIELD OF THE INVENTION

The present invention relates to access networks and to methods of carrying traffic over such networks.

### BACKGROUND OF THE INTENTION

Traditional access networks, servicing residential and small business customers have typically employed optical fibre transmissions to a head end from which customers are served via local distribution units. In the past, the final drop to the customer from the distribution point has comprised a twisted pair copper loop. In many cases this copper loop has previously been installed for telephony purposes.

More recently introduced systems employ optical transmission between the head end and the distribution point, and there is now a incentive to extend the optical transmission path to the customer so as to provide fibre to the home (FTTH). Such a configuration has the advantage of overcoming the severe bandwidth limitations of the copper loop by replacing that loop with a broadband optical path.

In a typical passive optical network providing fibre to the home, a head end or central office, which is typically located at the network operator's local point of presence, is connected to a number of outstations via a fibre network. A single fibre connection links the head end to a passive optical splitter which divides the optical power equally between a number of fibres, each of which terminates at an outstation. Signals sent downstream from the head end arrive at a reduced power level at all outstations. Each outstation converts the optical signal to an electrical signal and decodes the information. The information includes addressing information which identifies which components of the information flow are intended for a particular outstation. In the upstream direction, each outstation is allocated a time interval during which it is permitted to impress an optical signal on the upstream fibre. The fibres from all outstations are combined at the optical splitter and pass over the common fibre link to the head end. Signals sourced from any outstation propagate only to the head end. The upstream network may use separate fibre links and splitter, or may use the same network as the downstream direction but using a different optical wavelength. A protocol for organising traffic to and from each outstation, known as the FSAN (Full Service Access Network, iTU specification G.983.1), protocol, has been introduced for this purpose.

Typically, the propagation delay of the optical paths between the head end and each outstation will differ. To prevent collisions on the upstream path, the protocol must allow for this, either by creating a guard band between transmission opportunities for different outstations, or by causing each outstation to build out the optical path delay to a common value by adding delay in the electrical domain. This latter approach has been adopted by FSAN.

FSAN is a relatively complex protocol, requiring large scale integrated circuit technology in a practical system. Such integrated circuits are specialised for the PON application and are therefore costly because of the relatively small volumes used.

A further disadvantage of the FSAN protocol is that it employs asynchronous transfer mode (ATM) transport of traffic. Most, if not all, of this traffic will be internet Protocol (IP) packet traffic. These IP packets are of variable length, and can be as long as about 1500 bytes. Adaptation of this packet traffic into fixed length ATM cells requires the provision of interfaces for segmentation and subsequent reassembly of the IP packets. This requirement adds further to the cost and complexity of the installed system.

It is also known to construct wireless access networks (for example Fixed Wireless Access and Cellular Access) to provide customer network access where construction of wireline access networks is impractical or for other reasons. Whilst bandwidth in wireless systems may be considerably less than that of optical fibre access networks, both are examples of networks in which a head-end makes use of a multi-cast downstream communication medium, whilst multiple outstations share an upstream communications medium to the head-end. Such networks therefore share with optical networks the problems associated with differing path lengths between head-end and each outstation and of sharing a common upstream medium.

A complete multi-user game playing environment is described in European Patent Application Publication Number EP 0714684 A1. The environment provides game playing services to cable television subscribers over existing cable networks.

### OBJECT OF THE INVENTION

It is an object of the present invention to provide apparatus, methods, software, and signals which mitigate one or more of the problems associated with the prior art.

### SUMMARY OF THE INVENTION

According to an aspect of the invention, there is provided in a passive optical network comprising a head end connected over passive optical communications links to a plurality of outstations, in which the head end marshals upstream communication from the outstations, a method of co-ordinating the joining of one of said outstations to the network, wherein the method is characterised by comprising the following steps: the head end sending to each of said plurality outstations a message indicating the start of a time slot during which any of outstations may transmit a joining message to the head end; and in response, said joining outstation sending a joining message to the head end containing its network address, thereby allowing the head end to direct future messages to said joining outstation to effect marshalling of upstream communications from said joining outstation, wherein said joining outstation (512a) delays sending said joining message to the head end (511) for a random period after the start of the time slot.

Embodiments may provide a head end of a passive optical network, the head end, in use, being connected over passive optical communications links to a plurality of outstations, and being arranged, in use, to co-ordinate the joining of one of said outstations to the network and characterised by being adapted to send to each of said plurality outstations a message indicating the start of a time slot during which any of said outstations may transmit a joining message to the head end and to register a network address of a joining outstation in response receiving a joining message from said joining outstation, thereby allowing the head end to direct future messages to said joining outstation to effect marshalling of upstream communications from said joining outstation.

According to yet another aspect of the invention, there is provide an outstation connected, in use, over a passive optical communications link to a head end of a passive optical network comprising a plurality of outstations, the outstation characterised by being arranged, in use, to send a joining message to the head end containing its network address in response to receiving a message sent by the head end to each of said plurality outstations indicating the start of a time slot during which any of outstations may transmit a joining message to the head end, thereby allowing the head end to direct future messages to said outstation to effect marshalling of upstream communications from said outstation, and further arranged, in use, to delay sending said joining message to the head end (511) for a random period after the start of the time slot.

### BRIEF DESCRIPTION OF THE DRAWINGS

In order to show how the invention may be carried Into effect, embodiments of the invention are now described below by way of example only and with reference to the accompanying figures in which:
Figure 1 shows a schematic diagram of a passive optical access network (PON) in accordance with a preferred embodiment of the present Invention;
Figure 2 shows the structure of a downstream data frame;
Figure 3 shows the structure of a downstream command or pause frame; and
Figure 4 is a flow chart illustrating the use of a multiple access algorithm in the network of figure 1 to marshal upstream transmissions;
Figure 5 shows a schematic diagram of a wireless access network In accordance with a preferred embodiment of the present invention;
Figure 6 shows a schematic timing diagram of downstream and upstream data paths In accordance with the present invention;
Figure 7 is a flow chart illustrating the use of an Xon timer in the network of Figure 1 or Figure 5 to control upstream transmissions;
Figure 8 shows a possible structure of a command frame In accordance with the present invention;
Figure 9 is a flow chart illustrating how the sending of downstream command frames may be controlled at the head end;
Figure 10 is a flow chart illustrating the use, at the head end, of upstream burst delimiter command frames;
Figure 11 shows a schematic diagram of the structure of an outstation in accordance with the present invention.

### DETAILED DESCRIPTION OF PREFERRED EMBODIMENTS

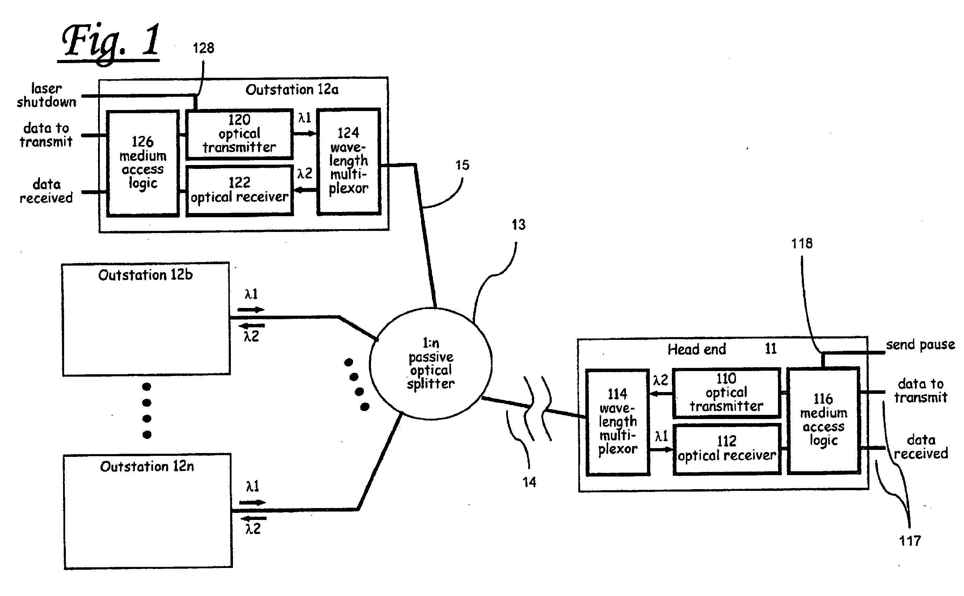

Referring first to figure 1, this shows in schematic form an exemplary FTTH access network in which a head end 11 is connected to a number of customer terminals or outstations 12a-12n through a 1:n passive optical splitter 13 via respective optical fibre paths 14 and 15. Typically, the distance from the head end to the splitter is up to around 5 km. The distance between any two outstations is assumed to be relatively small, typically about 500 m. The splitter 13 is located at a convenient point in the street and requires no power supply. In the system illustrated, downstream and upstream traffic use the same fibres and splitter, but each direction uses a different optical wavelength. Optionally, the network may use separate fibres and splitters for each direction of transmission.

As shown in figure 1, the head end 11 comprises an optical transmitter 110, typically a laser, operating at a first wavelength λ₁, and an optical receiver 112 operating at a second wavelength λ₂. The transmitter and receiver are coupled to fibre 14 via a wavelength multiplexer 114 so as to provide bi-directional optical transmission.

The transmitter and receiver are electrically coupled to control logic circuit 116, which circuit provides an interface 117 with an external network (not shown) to receive data to be transmitted downstream to the outstations 12a-12n and to transmit to the external network upstream data received from those outstations.

Each outstation comprises an optical transmitter 120 operating at a the second wavelength λ₂, and an optical receiver 122 operating at the first wavelength λ₁. The transmitter and receiver are coupled to fibre 15 via a wavelength multiplexer 124.

Since the optical path between an outstation and the head end passes through the splitter 13 In each direction, the optical transmission path has higher loss than in a simple point to point arrangement. To compensate for this transmission loss, the head end can be equipped with a powerful laser transmitter 110 and a sensitive receiver 112. Preferably the outstation eloctro-optics should be based on standard Gigabit Ethernet modules to minimise cost and to minimise the risk of danger from eye exposure at the customer premises.

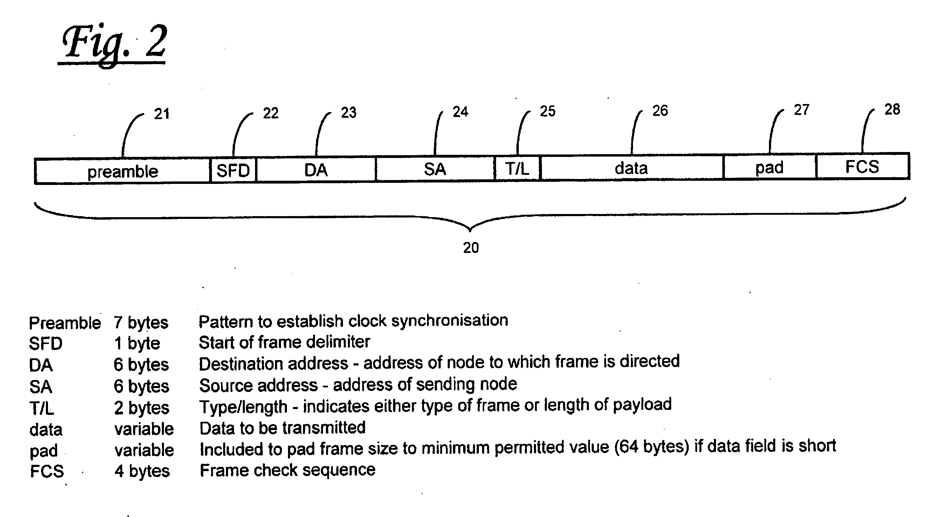

Information frames sent by the head end optical transmitter are broadcast (or multicast) to all outstations via the optical splitter. The structure of a typical information frame 20, as illustrated in Figure 2, comprises a preamble 21, a start of frame delimiter (SFD) 22, a destination address 23 of the outstation for which the message is Intended, and a data payload 26. The frame also includes the source address 24 of the sending node, a type/length field 25 indicating either the frame type or the payload length, and a frame check sequence 28. The payload may also include padding 27 if the data length is insufficient to fill the payload space.

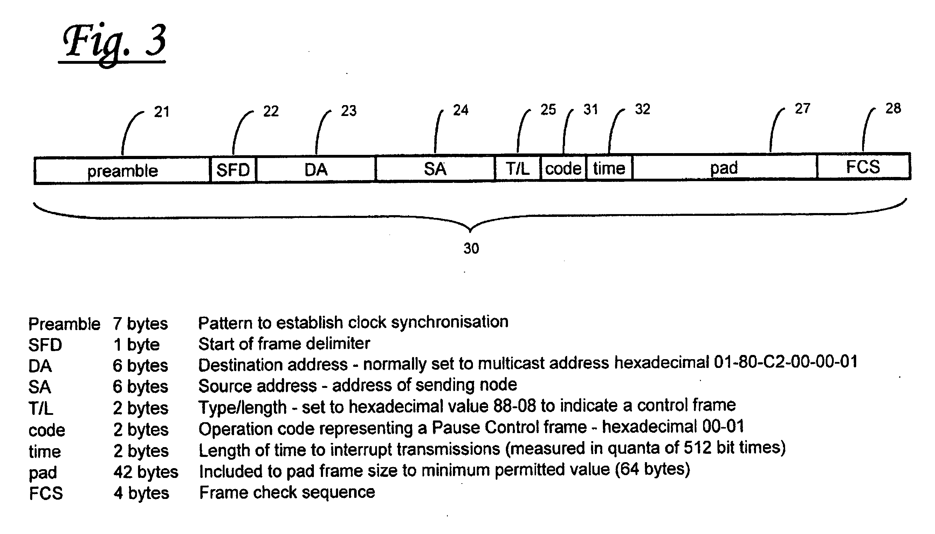

Periodically, these Information frames are interspersed with pause control frames generated under control of the head end. The structure of a pause control frame 30 is illustrated in Figure 3. As shown In Figure 3, the pause frame structure is similar to that of the data frame described above with the exception the type/length field 25, which is set to a value indicative of a control frame, is followed by a code field 31 representing a pause command and a time field 32 denoting the length of the pause. The specified pause time can be a pre-set value or zero, and pause frames sent before a previously specified pause time has expired cause any outstanding time interval to be over-ridden.

Figure 1 illustrates a hardware connection or send pause input 118 to the head end control or medium access logic (MAC) 116 from which transmission of a pause frame can be initiated. This function could also be achieved by software access to an internal control register.

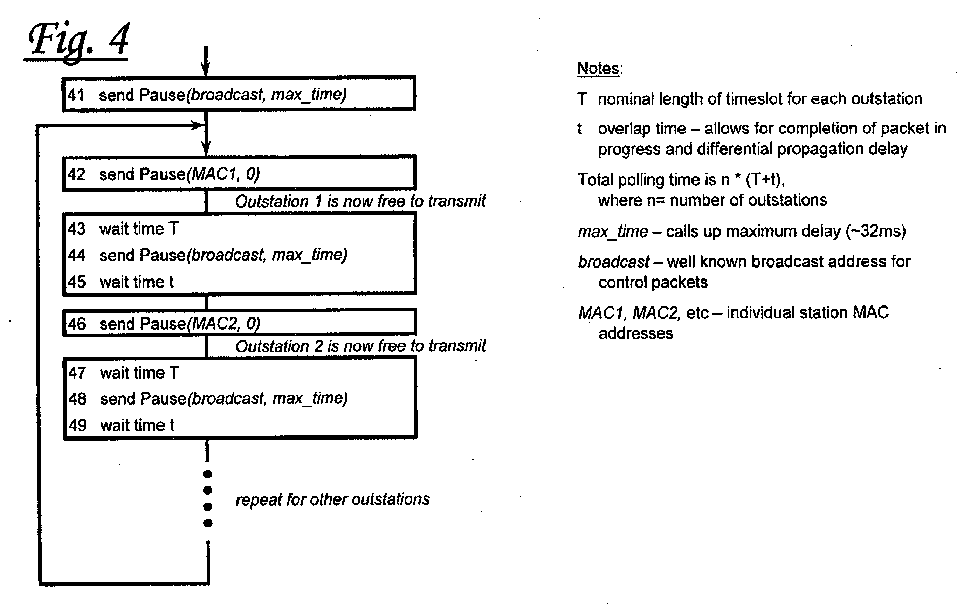

Referring now to Figure 4, the pause mechanism is used herein as a means to achieve marshalling and interleaving of upstream transmissions from the outstations connected to the passive splitter. All outstations are, in principle, able to transmit simultaneously. This is prevented by sending 41, 48 a global pause command to all outstations. Conveniently, this can be done by generating a pause frame containing a well known broadcast address and specifying a 'long' time interval, where 'long' represents a value which will cause any outstation to cease transmission for a time period that is longer that the destred active slot time for any outstation. The head end allows a 'guard time' which is fong enough to ensure that any frame which is already being transmitted has time to complete and upstream signals already on the medium propagate beyond the splitter point. The head end then issues its next pause command 42 containing the individual MAC address of that one of the outstations which is to be allowed to transmit, and specifying a pause time interval equal to a previously determined 'adaptation time'. The pause frame addressed to an individual MAC address is referred to as a 'directed pause frame'. This overrides the previous pause command for that outstation and, once the adaptation time interval has expired, causes any frames queued at the selected outstation to be sent on the medium and subsequently received at the head end. Transmissions from other outstations are Inhibited because of the unexpired pause time from the previous pause command 41, 48. Following the desired active slot time, the head end again issues a global pause command 48 and the process repeats for, each of the remaining outstations. Effectively, the head end issues in alternate time periods global pause commands which allow no outstation to transmit to the head end, and individual pause commands which allow one selected outstation to transmit to the head end. Advantageously, the method steps illustrated in Figure 4 may be carried out via a processor programmed with software instructions.

In a conventional Gigabit Ethernet using a point to point protocol, each optical transmitter remains active even during gaps between frame transmissions, and during pause intervals, when an 'idle' pattern is transmitted to maintain clock synchronisation at the receiver. In the multiply access system described herein, transmission of idle patterns during pause intervals is suppressed to avoid interference with frame transmissions from the active outstation. A control or laser shutdown input 128 to turn off the transmitting laser in the outstation is shown in Figure 1 for this purpose. This control Input can be driven either from real time software running in the outstation's node processor, or can be derived from additional hardware In the outstation.

The adaptation time interval is included to assist in control of the outstation laser (via laser shutdown input 128) and establishing a reliable optical connection to the newly enabled outstation, On receipt of a global pause command, control logic in an outstation is arranged to turn off the outstation laser transmitter once any currently transmitting frame has finished. The outstation MAC will continue to generate the idle pattern, but this pattern will not be impressed on the optical medium since the laser is now turned off. When a subsequent directed pause frame is received, the outstation control logic turns on the laser transmitter immediately. The Ethernet MAC function will continue to source idle patterns, since it is still inhibited from transmitting until the adaptation time has expired. The adaptation time interval allows the operating point of the outstation laser to stabilise, the head end receiver to adapt to the new optical signal level (which may differ between outstations because of laser tolerance and differences in path attenuation) and the receiver clock acquisition circuit to lock to the frequency and phase of the new outstation.

Several elements contribute to the guard time that is required to prevent potential collisions. These elements include uncertainty in the launch time of the downstream pause frame, because this frame must wait for completion of any data frame already started. There is also uncertainty In the time at which transmission from an active outstation will cease, again, because it must wait for completion of anv data frame in progress. There is also the differential propagation delay between outstations which will cause pause control frames to be received at different outstations at different times due to differing propagation delays. Optionally, the impact of differential propagation delay can be reduced by restricting the physical differential path length to different outstations,

The total time to interrogate all outstations is a compromise between the additional delay introduced by the multiple access mechanism and inefficiencies arising from the guard time. We have found for example that, in a network with 16 outstations, an active slot time of 200 microseconds with a guard band of 40 microseconds and an adaptation time of 10 microseconds leads to a total polling interval of 4 milfiseconds and an efficiency of 80% relative to standard point to point full duplex Ethernet. A bounded polling interval together with a minimum guaranteed slot time allow traffic contracts based on specified qualify of service.

Optionally, the length of each outstation's active time slot can be varied depending on the level of activity at that outstations and its contracted quality of service. Outstations which have been inactive for a significant length of time may be polled less frequently until new activity is detected, maybe every 100 milliseconds, or longer if it is deemed that the outstations has been turned off or disconnected. These enhancements increase efficiency at low load and allow unused traffic capacity to be reallocated to active outstations which can therefore achieve a higher burst rate.

When a new outstation is switched on and connected to the network, preferably its optical transmitter should be inhibited until the receive channel has a chance to synchronise with the downstream transmissions from the head end so as to avoid corrupting timeslots allocated to other outstations before receiving a global pause command from the head end.

To increase the downstream capacity of the network, either initially or as an upgrade to an existing network, traffic in the downstream direction may use multiple wavelengths, each wavelength being detected at one or more outstations using wavelength selective filters or couplers installed either in the outstations or at the coupler site. In this way, an asymmetrical network is generated, having higher capacity in the downstream direction. Pause frames would be launched on all active wavelengths to ensure all outstations receive timely pause commands.

As discussed above, it is preferred to employ separate wawefengths for upstream and downstream transmission to allow transmissions from the head end to be removed from the collision domain, The network can then work in full duplex, where downstream transmissions take place concurrently with upstream.

Optional the head end can be connected to the star coupler 13 using a single optical fibre (instead of a fibre pair) by adding wavelength multiplexers at each end of the fibre connection.

In a preferred implementation, a global pause command is used to turn off all outstations following an active transmission slot. This has the advantage of increasing system robustness since, If a 'turn off' pause command is corrupted and the currently active outstation continues to transmit beyond its allocated transmission slot, it is likely to cause corruption of data transfer from the outstation to which the next transmission slot is allocated, However, once this subsequent slot is complete, a further global pause command will be sent which will again be interpreted by all outstation as a 'turn off signal. Therefore, since it is unlikely that multiple consecutive global pause commands will be corrupted, transmission disruption is confined to a small number of transmission slots.

Optionally, instead of using a global pause command to turn off all outstations at the end of an active slot, a directed pause could be employed, addressed to the outstation to be turned off. Other outstations would remain turned off until their own directed pause time is overwritten by a directed pause frame containing the adaptation time. This is not the preferred implementation since the robustness of the system is reduced. However, it allows the head end of the system to be implemented using standard Ethernet switch components with an external controller (such as a computer processor running a real time operating system) to generate the sequence of pause command frames. (It should be noted that some Ethernet components delete incoming pause frames carrying the standard multicast address. This prevents global pause commands traversing such components.)

Optionally, the relative timing of the pause command frames intended to stop a first outstation from transmitting and permit a second outstation to transmit may be adjusted to reduce the guard band needed between transmissions from the two outstations using knowledge of the differential distance from the head end to each of the outstations. Such knowledge can be derived from physical distance measurements or by measuring electronically the round trip time for signals sent from the head end and looped back from the outstation.

Optionally, transmission of data frames from the head end may be inhibited when the time interval remaining before the next pause command frame is scheduled to be transmitted is less than the time needed to transmit a further data frame from the queue. This reduces the timing uncertainty arising from the need to wait for a current data frame to finish before a control frame can be transmitted and allows the size of the guard band to be reduced.

Optional, downstream and upstream paths can operate at different bit rates. In residential applications, the required upstream transmission rate is often significantly lower than the required downstream rate. For example, downstream transmission may be based on 1 Gbit/s Ethernet and upstream transmission on 100 Mbit/s. In such circumstances, cost savings accrue from the reduced cost of upstream laser transmitters designed for lower bit rate operation and the associated reduction In optical power budget requirements.

Optionally, the outstation laser control logic may include a watchdog timer which turns off the transmitting laser after a predetermined time has elapsed hollowing the receipt of a pause control frame addressed to that outstation, where the predetermined time interval is longer than the longest expected active transmission time slot. This limits corruption of upstream traffic from other outstations should the receive path to an outstation fail during its active time slot.

In practice, it is also possible for a contact wire to the outstation laser to break, leaving the laser switched on (i.e. "laser-on" failure). The effects of such a failure may be instigated by adding a switch in the power supply path to the laser, and arranged to switch off the laser after a predetermined time relative to its being switched on.

Conveniently, the head end may exert back pressure flow control on one or more outstations by increasing the adaptation time specified in the directed pause frame beyond that needed for components in the optical path to adjust to the operating conditions of the new outstation. This technique can be used to reduce congestion in the upstream path on the network side of the head end, or to throttle the amount of data the customer is permitted to send, according to a service contract. If the outstation is arranged to prioritise upstream traffic such that high priority traffic is sent first, then throttling the upstream path using this technique will still allow high priority traffic to receive preferential treatment. (Methods for indicating traffic priority are well known and include, for example, techniques specified in IEEE standard 802.1.) In the limit, if this adaptation time is increased to be equal to or greater than the active slot time, that outstation will not be able to send any data in that specific transmission slot.

There remains the question of the introduction and attachment of a "joiner" outstation into an existing access network as described. As previously mentioned, the head-end directs frames to the outstation by using its station MAC address as the frame destination MAC address. However, If a new outstation is attached, its station MAC address is not necessarily known at the head-end. It is therefore desirable to provide a means by which the outstation station MAC address and other associated user information can be automatically transferred to the head-end.

This inventlon uses an additional upstream slot for the purpose *of* co-ordinating the introduction of a joiner outstation. This slot is provided using the same "pause mechanism as that used to provide upstream time slots. Here the start of the slot will be indicated by a pause frame with a specific destination MAC address recognised at each outstation which may also be a member of a predetermined multi-cast group. However, the control slot will normality only occur relatively infrequently relative to the "round robin" cycle so as not to impact the efficiency of the PON significantly. This control slot is decoded by all outstations on the PON as an indication that any new joiner is free to transmit. Only those outstations which have not been acknowledged as PON members shall use this slot. New joiners will include outstations which: are programed to initial factory settings; have been moved from another PON; have been commanded to re-join the PON by the head-end. [It Is possible that the joining procedure may be used following every Outstation Optical Network Unit (ONU) power-up cycle although this is not seen as necessary].

A preferred embodiment uses the complete control slot for the upstream transmission opportunity. A new joiner outstations must not turn on its laser and transmit during the traffic related timeslots. The only time it is permitted to turn on its laser and transmit is during a control slot and only then under given conditions, When a joiner outstation receives the "pause" frame to indicate the start of the control slot it does not necessarily transmit immediately. In order to reduce the conflict between outstations attempting to join the PON simultaneously, a pseudo-random algorithm is used to determine exactly when the outstation will transmit. The likelihood of transmission should be chosen to be relatively small since the system needs to cope with all members of a PON (say 16) attempting to join at the same time. In order to join the PON the outstation must send a "join" control frame to the head-end. This frame will automatically contain the station MAC address of the joining outstation and couid also contain other information in the data payload if required for authentication. In response to the request to join, the outstation must validate and then acknowledge to the joiner station MAC address. This may or may not involve changing the time slot allocation frame to include an additional timeslot. If the outstation falls to receive a valid joiner acknowledgement frame within a given period of time it must then attempt to rejoin using a pseudo-random back-off time. A scheme known as "truncated binary exponential back-off" used in CSMA/CD half duplex Ethernet is suggested as follows:
- The back-off delay is an Integer multiple of the slot time. The number of slot times to delay before the n-th retransmission attempt is chosen as a uniformly distributed random integer r In the range 0 ≤ r < 2k where k = min (n, 10)

In any case, the back-off time should be chosen so as to generally increase with the number of failed attempts in order to reduce congestion in the joiner control slot. The random number generation should also be chosen so as to minimise number correlation between outstations. Encryption for security is optional.

A further enhancement is to allow multiple transmission opportunities within each control slot. This has the potential to allow more than one outstation to join during a single control timeslot and reduces the required number of control timeslots (and hence reduces the control slot overhead). As such, the control slot Is subdivided into a number of smaller periods, or sub-timeslots, each of which is an outstation transmission opportunity. In order to implement this enhancement the outstation must autonomously turn on and extinguish its laser for a specific defined period within a control slot. Here, the outstation receives a pause frame indicating the start of the control timeslot and a timer (internal to each outstation) is used to delimit the individual sub-timeslots.

Deregistration of an outstation by the headend may occur every time the outstation is switched off (detected, for example, by iack of response from that outstation over a relatively long predefined period) and re-registration may occur on each power-up, Where an outstation receives no indication of its allocation of a timeslot for a relatively long predetermined period, or is switched back on, it may assume that the head end has assumed it is has disconnected. The outstation then re-registers.

Whilst the foregoing description is given in terms of an optical network, it will be apparent that the invention is not limited in its application to such networks. It may also, for example, be applied to physical media such as wireless or high speed copper, in addition to optical media.

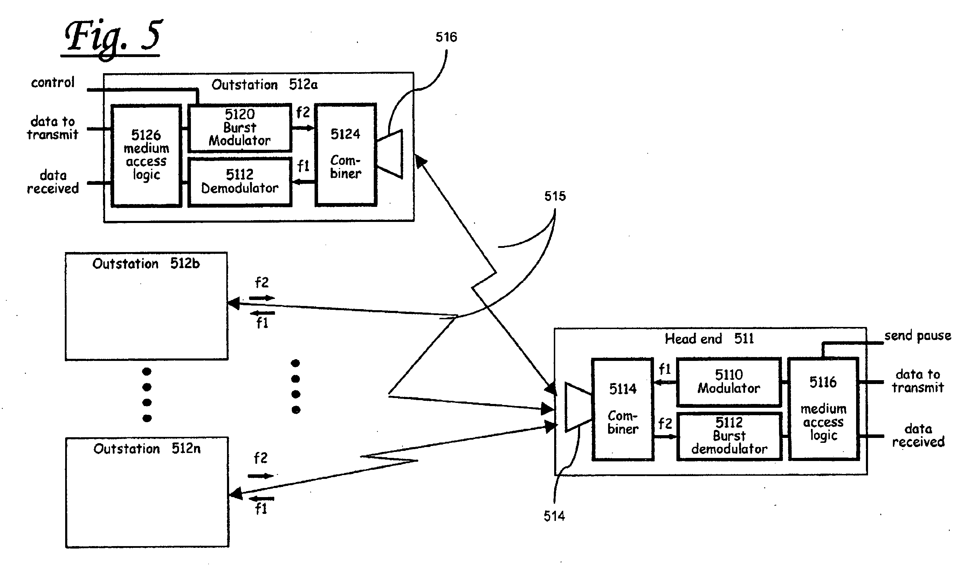

Referring now to Figure 5, this shows in schematic form an exemplary wireless access network, analogous to the optical access network of Figure 1, in which a head end 511 is connected to a number of customer terminals or outstations 512a-512n through a broadcast wireless path 515. The distance between any two outstations is assumed to be relatively small, typically about 500 m, but may be greater. In the system illustrated, downstream and upstream traffic use different frequencies, f1 and f2.

As shown in figure 5, the head end 511 comprises a modulator 5110 operating at a full frequency f1 and an burst demodulator 5112 operating at a second frequency f2. The transmitter and receiver are coupled to antenna 514 via a combiner 5114 so as to provide bi-directional wireless transmission.

The transmitter and receiver are electrically coupled to control logic circuit 5116, which circuit provides an interface with an external network (not shown) to receive data to be transmitted downstream to the outstations 512a-512n and to transmit to the external network upstream data received from those outstations.

Each outstation comprises an modulator 5120 operating at a the second frequency f2, and an burst demodulator 5112 operating at the first frequency f1. The modulator and demodulator are coupled to antenna 516 via a combiner 5124.

In this wireless embodiment, the total time to interrogate all outstations is again a compromise between the additional delay introduced by the multiple access mechanism and inefficiencies arising from the guard time. It is found for example that, in a network with 10 outstations, an active slot time of 1 millisecond with a guard band of 0.250 milliseconds leads to a total polling interval of 11.5 milliseconds and an efficiency of 80% relative to standard point to point full duplex Ethernet. A bounded polling interval together with a minimum guaranteed slot time allow traffic contracts based on specified quality of service.

In an alternative embodiment, rather than sending a multicast pause signal followed by a directed pause signal, each outstation is arranged to receive a directed command frame (a "directed burst" frame) comprising transmit duration. On receipt of such a frame, the recipient outstation is permitted to transmit upstream for a period not exceeding that indicated in the command frame.

Whereas in the first embodiment described above, the outstation transmitters are by default "on" in the absence of a command signal from the head end to the contrary, in the second embodiment the outstation transmitters are by default in principle "off" (in practice on "stand-by") in the absence of a command frame to the contrary.

The second embodiment has the added advantage of potentially requiring fewer downstream command frames per upstream time slot (i.e. one directed burst frame as opposed to a multicast pause plus a directed pause frame). This allows the "t" guard band to be further minimised since the transmitting outstation upstream Ethernet Mac scheduler can accurately shut down upstream, rather than additionally having to potentially spool a maximum size packet which, for example, on a 100Mbps fast Ethernet port adds 120 microsecond to "t". This in turn allows more outstations per shared upstream, and increases bandwidth efficiency. It is noted that both latency and jitter may be highly sensitive to the choice of the head end scheduler's "t" value. On 100Mbps links, the previously discussed guard bands become much more critical to the overall efficiency of the shared upstream bandwidth. The following items can reduce these guard bands significantly.

One can also mix the signals In the two methods, in appropriate ways, depending on the physical layer (PHY) transmission characteristics and the limitations of the Ethernet switching MAC layer specific to a equipment vendor. For example if it is easier for an ASIC vendor to leave the MAC normally "on", then the multicast pause signal to turn all outstations off periodically can be sent in combination with a directed burst control signal (as opposed to a directed pause signal) which still offers little "t" guard band reductions.

In a still further enhancement, a burst delimiter message is appended to a time sliced upstream burst at the outstation. This allows for more intelligent head end time slice scheduling based on feedback from the outstation. In general the upstream burst delimiter may contain information indicative of the volume of traffic - processed and/or pending - for upstream transmission since the last allocated time slot. The burst delimiter may be sent upon completion of the currently allocated time slot (or at the beginning of an allocated time slot). For example, the burst delimiter command frame may contain per Ethernet MAC upstream burst or running counted). Alternatively distinct command frames may be used each to indicate:
- an "end of burst" delimiter signal where available traffic for transmission upstream is less than the allocated time slot allows and
- a "more to burst" delimiter signal where the amount of traffic available for upstream transmission exceeds the allocated time slot.

Upstream transmission of such burst delimiter command frames allows the head end to dynamically resize upstream time slots allocated to outstations. This helps concentrate the complexity of scheduling in the head end rather than in the outstations, thereby reducing cost and complexity at the outstation, whilst maximizing bandwidth efficiency at both high bit rates (e.g. 1000Mbps) and especially at lower bit rates (e.g, 100Mbps) of point to multipoint Ethernet first mile networks.

Specifically, in the case of a burst delimiter command frame indicative of an outstation having no more data to transmit upstream, the head end may react to an "end of burst" signal by immediately allocating a time slot to another outstation, thereby avoiding wasted upstream bandwidth when an outstation has no more traffic to transmit. The burst delimiter information may also be used at the head end to create a compiled history of the decision dynamics of a short term burst profile for each, or all, outstations. The head end can then use a token debit/credit system for controlling committed and excessive outstation upstream fairness processing on next or future burst time slots allocated to outstations.

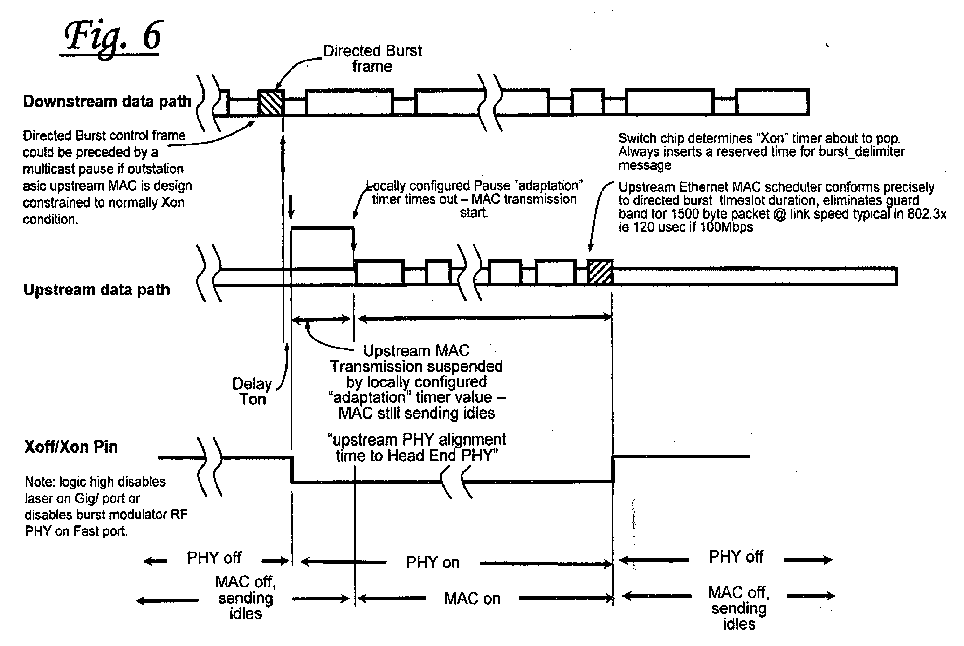

Referring now to Figure 6, the detailed operation of the method is as follows. After a hard or soft reset, the initialised condition of PHY disable (Xon/Xoff) pin is 'logic high' (i.e. PHY is normally turned off).

Preferably, this 802.3x-like Burst PHY control method is enabled by setting a bit in an ASIC control register. When the feature is enabled by setting such a control bit, the initialised condition of laser disable is 'logic high' (that is, the laser is turned off). The default (reset) state of the control bit should disable the laser control feature.

Preferably, a new Xon/Xoff PHY control pin on the Ethernet switch / MAC ASIC is reserved for this optional Burst PHY control feature. Preferably, an ASIC control specified Ethernet MAC port (Gigabit Ethernet or Fast Ethernet) for a multi-port switch ASIC arrangement. There is also an ASIC control register in which the Ethernet MAC port or the switch asic Ethernet MAC address can be set for the directed pause or burst control feature to use. This Burst PHY control feature makes use of a configurable ASIC control register for the adaptation timer value (rather than using directed pause timer as In Method B, this allows upstream scheduler to be more intelligent and enable a minimized "t" guard band by knowing ahead of time when the end of transmission event will occur)

Upon directed_burst reception, the "Xon/Xoff" pin goes 'logic low' (i.e. Burst PHY is turned on), but upstream MAC transmission (to the Head End or wireless BTS) is suspended by a provisioned adaptation timer value (whose operation is similar to that described above for the pause-based method), where the MAC is still sending idles during this "upstream Burst PHY alignment time". When the provisioned adaptation timer expires, upstream MAC transmission is resumed and the directed burst timer value Is now used as a "Xon" timer. Upon expiry of the directed burst "Xon" timer, the upstream MAC optionally appends a burst delimiter message - a feature which can be turned off or built in to an outstation's switch ASIC as needed - then enters the paused state.

The upstream MAC can also be disabled by means of a multicast pause with a non-zero timer value. When the upstream MAC transmit function is in the paused state, the MAC will transmit idle symbols as defined in the IEEE Gigabit Ethernet specification; similarly for the Fast Ethernet port. In this case, the burst PHY Xon/Xoff pin will be in a "logic high" state.

Delay "Ton" Is the processing time at the outstation for a directed_burst message

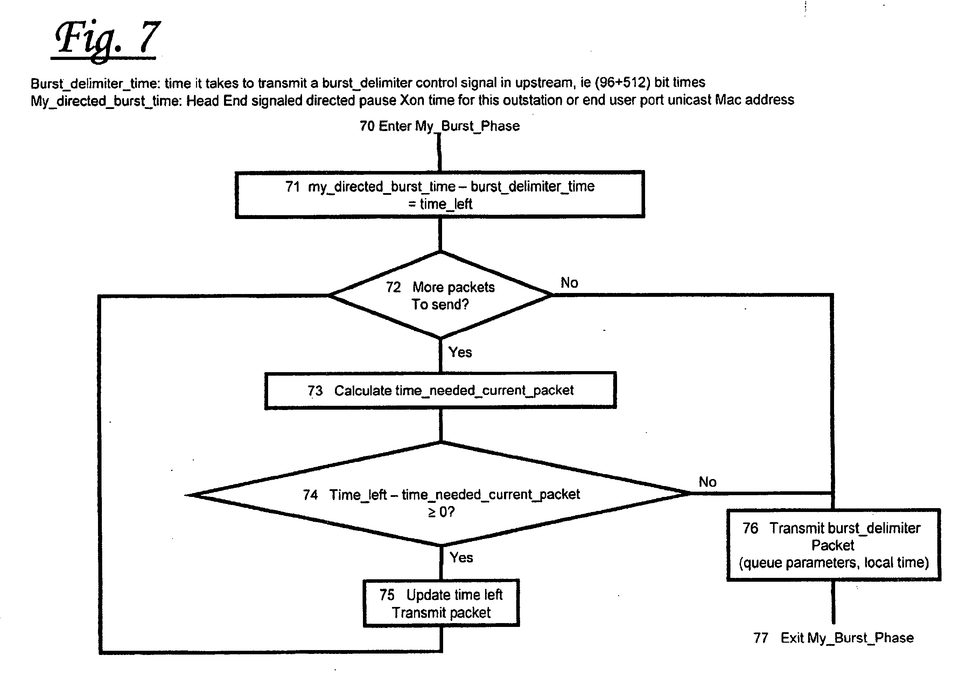

Referring now to Figure 7, at the outstation upstream MAC egress port, before taking a packet off the egress queue destined for the upstream, each packet length shall be inspected and a determination made as to whether, given the upstream link speed (e.g. 10OMbps or 1000Mbps), there is time to transmit the packet before the end of the signalled timeslot timer (signalled as the Xon timer in the directed_burst message) expires. Where appropriate, this calculation should also take into account the time required to append and transmit a burst_delimiter message as the final upstream packet.

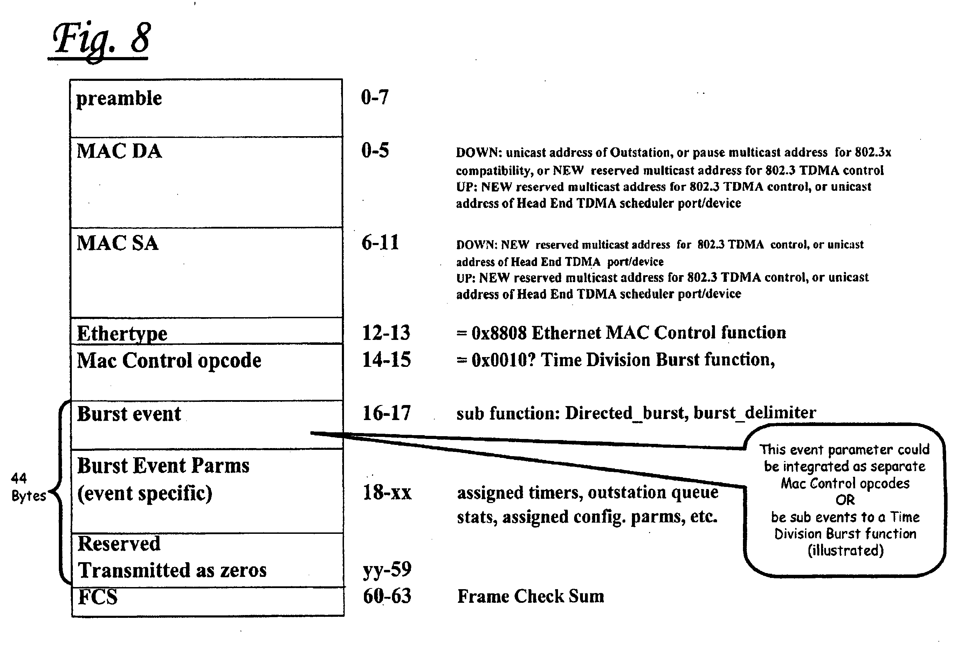

Referring now to Figure 8, there is shown the structure of a command frame format appropriate for carrying the necessary command frames in accordance with the present invention. The figure illustrates the component fields of the frame, the bits allocated per field, and the nature of the information carried in each field. The burst event field could alternatively be integrated as separate Mac control operation codes, or be sub-events to a time division burst function as illustrated in Figure 8.

In addition to the above, the following features will improve the robustness of the protocol, but are not essential for its basic operation. Preferably, error conditions are readable by the attached node processor via bits in a status register. Optionally, when an error condition arises the MAC may generate an interrupt.

Preferably, there should be a read-only status bit asic register which Indicates that the MAC/Switch chip supports burst PHY control and it's current on/off condition.

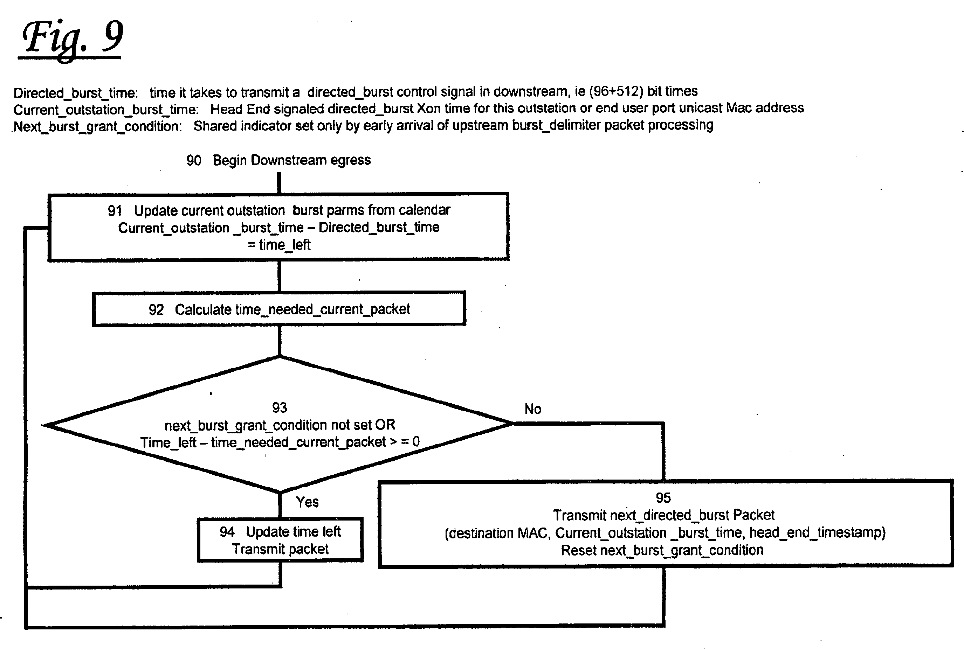

Referring now to Figure 9, it would be desirable for upstream bandwidth efficiency reasons that the head end downstream egress method utilize a similar optimization to that used at the outstation upstream egress method when inserting a directed_burst command into the downstream. To avoid the potential head end wait time to send a multicast pause plus a directed pause, or to send a directed burst command to an outstation, the downstream MAC may check the time required to send a directed burst local parameter before each packet is pulled off the egress queue for the downstream port. A head end downstream burst control flow Is given for reference purposes.

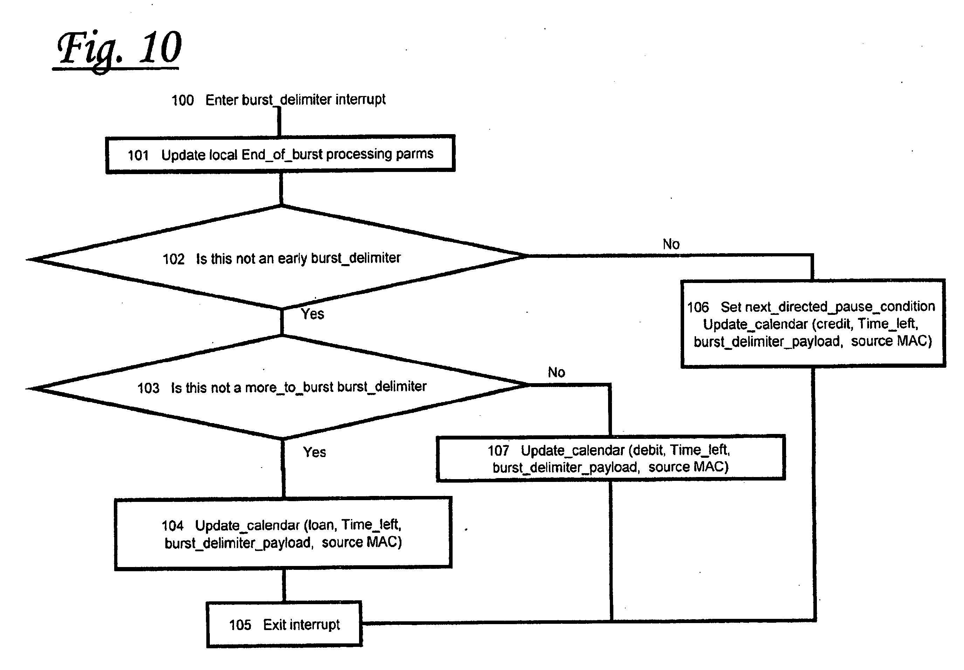

Referring now to Figure 10, a flow control method is given for the head end receiving the upstream traffic, and in which the previously discussed burst delimiter message is processed and dynamic updates are made to the overall outstations upstream burst allocation schedule. Updates may affect current, next, or future allocated time slots for an individual outstation's committed and excessive service level agreement policy.

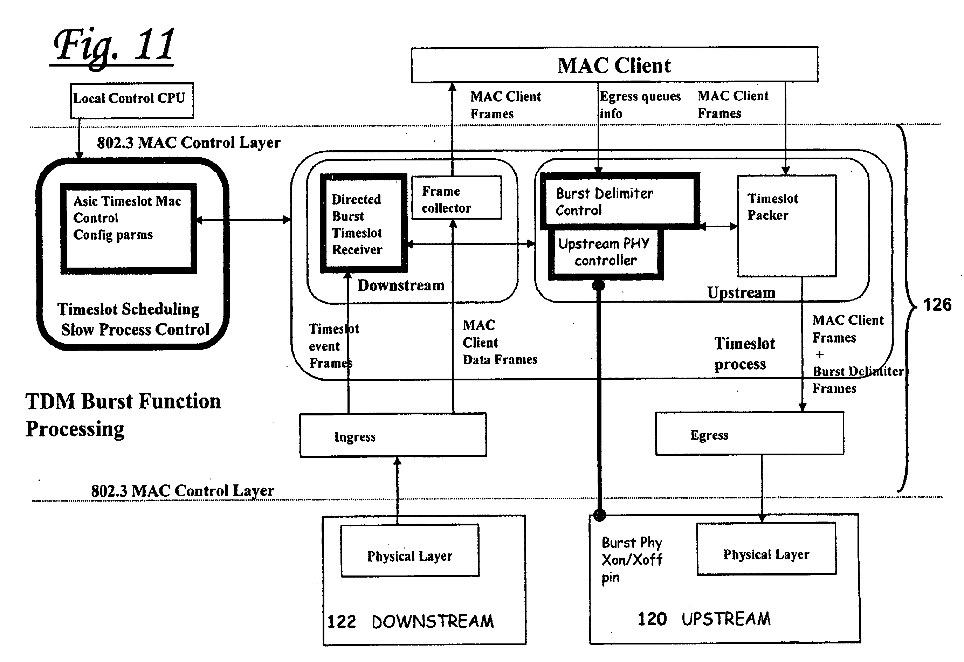

Referring now to Figure 11 there is shown a more detailed outstation system perspective of how the various components associated In the burst method interact. These include upstream (PHY layer control and burst delimiter control) and downstream (directed burst and future configuration control) forwarding process interactions needed In the outstation MAC Control layer. It illustrates how local ASIC configuration control parameters are set by the local CPU, or by a remote configuration control command interfaces to the Burst MAC Control Layer method.

Whilst the invention has been described above in terms of two broad embodiments employing respectively a combination of multi-cast pause and directed pause signals, and directed burst commands, it will be apparent to one skilled in the Art that other combinations of such messages is also both possible and practical.

It will also be apparent to one skilled in the Art that the methods described apply not just to tree-structured point-to-multipoint networks such as those lliustrated in Figures 1 and 5, but also to those networks conventionally described as "ring" networks (or point to consecutive point networks as they are known in the field of wireless communication).

Any range or device value given herein may be extended or altered without losing the effect sought, as will be apparent to the skilled person for an understanding of the teachings herein.

## Claims

1. In a passive optical network comprising a head end (511) connected over passive optical communications links to a plurality of outstations (512a-512n), in which the head end marshals upstream communication from the outstations, a method of co-ordinating the joining of one of said outstations to the network, wherein the method is **characterised by** comprising the following steps:-
the head end (511) sending to each of said plurality outstations (512a-512n) a message indicating the start of a time slot during which any of outstations may transmit a joining message to the head end; and
in response, said joining outstation (512a) sending a joining message to the head end (511) containing its network address, thereby allowing the head end to direct future messages to said joining outstation to effect marshalling of upstream communications from said joining outstation, wherein said joining outstation (512a) delays sending said joining message to the head end (511) for a random period after the start of the time slot.

2. A method according to claim 1, wherein said message indicating the start of a time slot is sent by the head end (511) to a multi-cast group address recognized by each of said plurality of outstations (512a-512n).

3. A method according to any preceding claim comprising the further step of the head end (511), in response to receiving the joining message, sending the joining outstation (512a) an acknowledgement message.

4. A method according to any preceding claim comprising the further step of the joining outstation (512a), in response to not having received an acknowledgement message from said head end (511), sending a further joining message to the head end in a subsequent time slot indicated by the head end and wherein the joining outstation waits for a random integer number of time slots before sending the further joining message.

5. A method according to any preceding claim, wherein said plurality of outstations (512a-512n) each comprise a laser for transmitting signals to the head end, and wherein until it has joined, said joining outstation is prevented from turning on its laser except during the time slot.

6. An outstation (512a) connected, in use, over a passive optical communications link to a head end (511) of a passive optical network comprising a plurality of outstations (512a-512n), the outstation **characterised by** being arranged, in use, to send a joining message to the head end (511) containing its network address in response to receiving a message sent by the head end to each of said plurality outstations (512a-512n) indicating the start of a time slot during which any of outstations may transmit a joining message to the head end, thereby allowing the head end to direct future messages to said outstation to effect marshalling of upstream communications from said outstation, and further arranged, in use, to delay sending said joining message to the head end (511) for a random period after the start of the time slot.

7. A outstation according to claim 6 being arranged, in use, to send a further joining message to the head end (511) in a subsequent time slot indicated by the head end in response to not having received an message from said head end acknowledging said joining message, and arranged, in use, to wait for a random integer number of time slots before sending the further joining message.

8. A outstation according to any of claims 6 to 7, wherein comprising a laser for transmitting signals to the head end (511), and prevented, until it has joined, from turning on its laser except during the time slot.

9. A computer program comprising computer program code means arranged to perform all of the steps of the method of any of claims 1 to 5 when said program is run on a computer.

10. A computer program as claimed in claim 9 embodied on a computer readable medium.

## Patentansprüche

1. Verfahren in einem passiven optischen Netz, das eine Kopfstation (511) umfasst, die über passive optische Kommunikationsstrecken mit einer Mehrzahl von Außenstationen (512a - 512n) verbunden ist, wobei die Kopfstation Aufwärtskommunikation von den Außenstationen marshallt, zum Koordinieren des Anschließens einer der Außenstationen an das Netz, wobei das Verfahren **dadurch gekennzeichnet ist, dass** es die folgenden Schritte umfasst:
Senden durch die Kopfstation (511) an jede der Mehrzahl von Außenstationen (512a - 512n) einer Nachricht, die den Beginn eines Zeitschlitzes anzeigt, während dessen jede von Außenstationen eine Anschlussnachricht an die Kopfstation senden kann; und
Senden als Antwort durch die sich anschließende Außenstation (512a) einer Anschlussnachricht an die Kopfstation (511), die ihre Netzadresse enthält, um dadurch der Kopfstation zu ermöglichen, zukünftige Nachrichten zum Durchfiihren von Marshalling von Aufwärtskommunikationen von der sich anschließenden Außenstation an die sich anschließende Außenstation zu richten, wobei die sich anschließende Außenstation (512a) das Senden der Anschlussnachricht an die Kopfstation (511) für eine beliebige Zeitspanne nach dem Beginn des Zeitschlitzes verzögert.

2. Verfahren nach Anspruch 1, wobei die Nachricht, die den Beginn eines Zeitschlitzes anzeigt, durch die Kopfstation (511) an eine Multicast-Gruppenadresse gesendet wird, die von jeder der Mehrzahl von Außenstationen (512a - 512n) erkannt wird.

3. Verfahren nach einem der vorhergehenden Ansprüche, umfassend den weiteren Schritt der Kopfstation (511) des Sendens als Antwort auf den Empfang der Anschlussnachricht einer Bestätigungsnachricht an die Außenstation (512a).

4. Verfahren nach einem der vorhergehenden Ansprüche, umfassend den weiteren Schritt der sich anschließenden Außenstation (512a) als Reaktion darauf, dass sie keine Bestätigungsnachricht von der Kopfstation (511) empfangen hat, des Sendens einer weiteren Anschlussnachricht an die Kopfstation in einem nachfolgenden Zeitschlitz, der durch die Kopfstation angezeigt wird, und wobei die sich anschließende Außenstation eine beliebige ganze Zahl von Zeitschlitzen abwartet, bevor sie die weitere Anschlussnachricht sendet.

5. Verfahren nach einem der vorhergehenden Ansprüche, wobei die Mehrzahl von Außenstationen (512a - 512n) jeweils einen Laser zum Senden von Signalen an die Kopfstation umfasst, und wobei die sich anschließende Außenstation daran gehindert wird, ihren Laser außer während des Zeitschlitzes einzuschalten, bis sie sich angeschlossen hat.

6. Außenstation (512a), die in Verwendung über eine passive optische Kommunikationsstrecke mit einer Kopfstation (511) eines passiven optischen Netzes verbunden ist, das eine Mehrzahl von Außenstationen (512a - 512n) umfasst, wobei die Außenstation **dadurch gekennzeichnet ist, dass** sie so ausgelegt ist, dass sie in Verwendung als Antwort auf den Empfang einer Nachricht, die von der Kopfstation an jede der Mehrzahl von Außenstationen (512a - 512n) gesendet wird und den Beginn eines Zeitschlitzes anzeigt, während dessen jede von Außenstationen eine Anschlussnachricht an die Kopfstation senden kann, eine Anschlussnachricht, die ihre Netzadresse enthält, an die Kopfstation (511) sendet, um dadurch der Kopfstation zu ermöglichen, zukünftige Nachrichten zum Durchfiihren von Marshalling von Aufwärtskommunikationen von der Außenstation an die Außenstation zu richten, und ferner so ausgelegt ist, dass sie in Verwendung das Senden der Anschlussnachricht an die Kopfstation (511) für eine beliebige Zeitspanne nach dem Beginn des Zeitschlitzes verzögert.

7. Außenstation nach Anspruch 6, die so ausgelegt ist, dass sie in Verwendung als Reaktion darauf, dass sie keine Nachricht von der Kopfstation empfangen hat, welche die Anschlussnachricht bestätigt, eine weitere Anschlussnachricht in einem nachfolgenden Zeitschlitz, der durch die Kopfstation angezeigt wird, an die Kopfstation (511) sendet, und so ausgelegt ist, dass sie in Verwendung eine beliebige ganze Zahl von Zeitschlitzen abwartet, bevor sie die weitere Anschlussnachricht sendet.

8. Außenstation nach einem der Ansprüche 6 bis 7, wobei umfassend einen Laser zum Senden von Signalen an die Kopfstation (511) und gehindert am Einschalten ihres Lasers außer während des Zeitschlitzes, bis sie sich angeschlossen hat.

9. Computerprogramm, umfassend Computerprogrammcodemittel, die so ausgelegt sind, dass sie alle Schritte des Verfahrens nach einem der Ansprüche 1 bis 5 ausführen, wenn das Programm auf einem Computer ausgeführt wird.

10. Computerprogramm nach Anspruch 9, das auf einem computerlesbaren Medium enthalten ist.

## Revendications

1. Dans un réseau optique passif comprenant une tête de réseau (511) reliée sur des liaisons de communications optiques passives à une pluralité de stations extérieures (512a-512n), dans lequel la tête de réseau commande une communication en amont à partir des stations extérieures, un procédé de coordination de la jonction de l'une desdites stations extérieures au réseau, dans lequel le procédé est **caractérisé en ce qu'**il comprend les étapes suivantes :
la tête de réseau (511) envoie à chacune de ladite pluralité de stations extérieures (512a-512n) un message indiquant le début d'un intervalle de temps au cours duquel l'une quelconque des stations extérieures peut transmettre un message de jonction à la tête de réseau ; et
en réponse, ladite station extérieure de jonction (512a) envoie un message de jonction à la tête de réseau (511) contenant son adresse de réseau, ce qui permet à la tête de réseau de diriger de futurs messages vers ladite station extérieure de jonction pour commander des communications en amont à partir de ladite station extérieure de jonction, dans lequel ladite station extérieure de jonction (512a) retarde l'envoi dudit message de jonction à la tête de réseau (511) pendant une période aléatoire après le début de l'intervalle de temps.

2. Procédé selon la revendication 1, dans lequel ledit message indiquant le début d'un intervalle de temps est envoyé par la tête de réseau (511) à une adresse de groupe multicast reconnue par chacune de ladite pluralité de stations extérieures (512a-512n).

3. Procédé selon l'une quelconque des revendications précédentes, comprenant en outre l'étape consistant en ce que la tête de réseau (511), en réponse à la réception du message de jonction, envoie un message d'accusé de réception à la station extérieure de jonction (512a).

4. Procédé selon l'une quelconque des revendications précédentes, comprenant en outre l'étape consistant en ce que la station extérieure de jonction (512a), en réponse à la non-réception d'un message d'accusé de réception en provenance de ladite tête de réseau (511), envoie un autre message de jonction à la tête de réseau dans un intervalle de temps suivant indiqué par la tête de réseau et dans lequel la station extérieure de jonction attend pendant un nombre entier aléatoire d'intervalles de temps avant d'envoyer l'autre message de jonction.

5. Procédé selon l'une quelconque des revendications précédentes, dans lequel ladite pluralité de stations extérieures (512a-512n) comprennent chacune un laser pour transmettre des signaux à la tête de réseau, et dans lequel, jusqu'à sa jonction, ladite station extérieure de jonction est empêchée d'activer son laser sauf au cours de l'intervalle de temps.

6. Station extérieure (512a) reliée, en utilisation, sur une liaison de communication optique passive à une tête de réseau (511) d'un réseau optique passif comprenant une pluralité de stations extérieures (512a-512n), la station extérieure étant **caractérisée en ce qu'**elle est agencée, en utilisation, pour envoyer un message de jonction à la tête de réseau (511) contenant son adresse de réseau en réponse à la réception d'un message envoyé par la tête de réseau à chacune de ladite pluralité de stations extérieures (512a-512n) indiquant le début d'un intervalle de temps au cours duquel 1"une quelconque des stations extérieures peut transmettre un message de jonction à la tête de réseau, ce qui permet à la tête de réseau de diriger de futurs messages vers ladite station extérieure pour commander des communications en amont à partir de ladite station extérieure, et la station extérieure étant en outre agencée, en utilisation, pour retarder l'envoi dudit message de jonction à la tête de réseau (511) pendant une période aléatoire après le début de l'intervalle de temps.

7. Station extérieure selon la revendication 6, qui est agencée, en utilisation, pour envoyer un autre message de jonction à la tête de réseau (511) dans un intervalle de temps suivant indiqué par la tête de réseau en réponse à la non-réception d'un message en provenance de ladite tête de réseau accusant réception dudit message de jonction, et qui est agencée, en utilisation, pour attendre pendant un nombre entier aléatoire d'intervalles de temps avant d'envoyer l'autre message de jonction.

8. Station extérieure selon l'une quelconque des revendications 6 et 7, comprenant un laser pour transmettre des signaux à la tête de réseau (511), et étant empêchée, jusqu'à sa jonction, d'activer son laser sauf au cours de l'intervalle de temps.

9. Programme informatique comprenant des moyens de code de programme informatique agencés pour effectuer toutes les étapes du procédé selon l'une quelconque des revendications 1 à 5 lorsque ledit programme est exécuté sur un ordinateur.

10. Programme informatique selon la revendication 9, réalisé sur un support lisible par ordinateur.
